# DEMANDE DE BREVET EUROPEEN

(11) **EP 3 809 019 A1**
(43) Date de publication de la demande: **21.04.2021**
(21) Numéro de dépôt: 20195230.6
(22) Date de dépôt: 09.09.2020
(51) Int. Cl.: F16H 57/027, F16L 37/00

(54) **DISPOSITIF DE RACCORDEMENT FLUIDIQUE, EN PARTICULIER POUR L'AERATION D'UN CARTER DE BOITE DE VITESSE**

(30) Priorité: 17.10.2019 FR 1911604
(71) Demandeur: AKWEL, 01410 Champfromier (FR)
(72) Inventeur: DEROM, Quentin, 84000 Avignon (FR)

(57) **Abrégé**

L'embout (12) comprend un corps tubulaire creux (24) d'axe principal longitudinal (X) et pourvu d'une pluralité de fentes longitudinales (26) s'étendant depuis une extrémité ouverte (24A) de l'embout (12) et délimitant une pluralité de pattes d'encliquetage (28 ; 28A, 28B) pourvue chacune d'un pied d'encliquetage délimité axialement par un épaulement radial et se prolongeant axialement par une arête de guidage vers la dite extrémité libre, l'arrête de guidage présentant un sommet correspondant à un maximum d'effort d'encliquetage lié au franchissement dudit sommet. Au moins des première (28A) et deuxième (28B) pattes définissant respectivement des premier et deuxième sommets, les sommets sont décalés axialement l'un par rapport à l'autre.

## Description

### Domaine technique.

La présente invention concerne un dispositif de raccordement fluidique par encliquetage d'un embout sur un organe externe. L'invention s'applique plus spécifiquement mais non exclusivement au raccordement d'un embout d'un organe d'aération dans un carter d'une boîte de vitesse d'un véhicule automobile.

Généralement, le carter de boîte de vitesse se présente sous la forme d'un boîtier, par exemple réalisé en matériau métallique. Plus particulièrement, le boîtier peut présenter en outre au moins une ouverture pour l'aération de la boîte de vitesse, généralement prévue sur le dessus du boîtier et qui communique avec l'intérieur de celui-ci. L'organe d'aération, connu également sous le terme de « reniflard » peut comporter par exemple un tuyau de mise à l'air libre de l'intérieur de la boîte de vitesse qui débouche à l'extérieur en un endroit en principe protégé à l'égard de la pénétration d'impuretés.

Ainsi, lors du fonctionnement de la boîte de vitesse, l'huile contenue dans celle-ci s'échauffe et les vapeurs formées s'échappent à l'extérieur grâce à l'organe d'aération.

### Technique antérieure.

L'organe d'aération peut comporter un embout de fixation à l'intérieur de l'orifice du boîtier de carter. Il est ainsi connu de l'art antérieur, notamment du document US20190186615A1, un organe d'aération comprenant un embout de fixation de l'organe sur une ouverture d'aération du boîtier de carter. L'embout de fixation comprend un corps de forme générale tubulaire présentant une pluralité de découpes délimitant des pattes pourvues à leur extrémité d'une saillie de retenue.

Lors de l'emmanchement de l'embout dans l'ouverture d'aération, l'effort à produire est relativement important du fait de la présence d'une pluralité de pattes d'encliquetage. Cet emmanchement peut alors se révéler difficile à opérer et il est parfois nécessaire de forcer l'insertion de l'embout au risque de déformer plastiquement et irréversiblement les pattes d'encliquetage ou l'embout lui-même.

Il existe donc un besoin d'un embout d'encliquetage dont l'emmanchement dans un organe externe prévu à cet effet serait facilité tout en assurant une fixation solide et fiable à cet organe externe.

### Résumé de l'invention

A cet effet, l'invention a pour objet un embout à raccorder par encliquetage à un organe externe, comprenant un corps tubulaire creux d'axe principal longitudinal X et pourvu d'une pluralité de fentes longitudinales s'étendant depuis une extrémité ouverte de l'embout et délimitant une pluralité de pattes d'encliquetage, chaque patte comportant une extrémité libre pourvue d'un pied d'encliquetage délimité axialement par un épaulement radial d'encliquetage et se prolongeant axialement par une arête de guidage vers ladite extrémité libre, l'arrête de guidage présentant un sommet correspondant à un maximum d'effort d'encliquetage lié au franchissement dudit sommet, **caractérisé en ce que** les épaulements radiaux s'étendent dans un même plan radial défini par rapport à l'axe principal X **et en ce que,** au moins des première et deuxième pattes définissant respectivement des premier et deuxième sommets, les sommets sont décalés axialement l'un par rapport à l'autre selon l'axe principal X de telle sorte que la valeur de l'intensité de l'effort cumulatif instantané d'encliquetage des deux pattes dans l'organe externe reste toujours inférieure à la somme des valeurs maximales d'effort d'encliquetage de chacune des pattes.

Grâce à l'invention, l'effort total de fixation de l'embout dans l'organe externe est avantageusement réduit ce qui permet de limiter les contraintes exercées sur l'embout lui-même lors de l'opération d'encliquetage. En effet, le décalage axial des sommets d'intensité d'effort d'encliquetage permet de faciliter l'emmanchement simultané des pattes, par exemple dans une ouverture prévue à cet effet dans l'organe externe. La répartition des efforts d'encliquetage de l'ensemble des pattes selon la direction axiale permet de faciliter la fixation de l'embout d'encliquetage sur l'organe externe par encliquetage.

Un embout selon l'invention peut en outre l'une ou plusieurs des caractéristiques suivantes.

Dans un autre mode de réalisation de l'invention, l'arête de guidage comprend une portion axiale sensiblement rectiligne et une portion à rampe se rejoignant pour définir le sommet, la portion rectiligne de chacune des première et deuxième pattes étant de longueur axiale différente.

Dans un autre mode de réalisation de l'invention, la portion à rampe de chacune des pattes présente un profil curviligne ou arrondi.

Dans un autre mode de réalisation de l'invention, la portion à rampe forme un arc de cercle et/ou présente une forme rectiligne en biseau.

Dans un autre mode de réalisation de l'invention, au moins l'une des première et deuxième pattes présente une portion rectiligne de longueur axiale nulle et la portion à rampe rejoint l'épaulement radial pour définir le sommet.

Dans un autre mode de réalisation de l'invention, le pied d'encliquetage est formé à distance du bord d'extrémité libre et l'arête de guidage est espacée dudit bord par une portion d'engagement amincie relativement au pied d'encliquetage. Autrement dit, la patte d'encliquetage présente un rétrécissement de sa section radiale du pied d'encliquetage vers la portion d'engagement. En conséquence, cette portion d'engagement amincie est configurée pour ne produire sensiblement aucun effort d'engagement de l'embout avec l'organe externe.

Dans un autre mode de réalisation de l'invention, un embout comprend une paire de premières pattes définissant des premiers sommets et une paire de deuxièmes pattes définissant des deuxièmes sommets, les pattes de chacune des paires sont situées en vis-à-vis l'une de l'autre.

Dans un autre mode de réalisation de l'invention, les pattes d'encliquetage présentent chacune un même profil d'encliquetage qui fait saillie radialement vers l'extérieur ou vers l'intérieur de chaque patte

Dans un autre mode de réalisation de l'invention, comprenant un corps sensiblement annulaire, la répartition des pattes est régulière autour de la circonférence du corps.

L'invention concerne également un dispositif de raccordement comprenant un embout selon l'invention et un organe externe configuré pour recevoir l'embout par encliquetage, caractérisé en ce que l'organe externe comprend un rebord annulaire avec lequel l'embout coopère par encliquetage interne ou externe.

De préférence, l'organe externe comprend une ouverture annulaire délimité par un col présentant un rebord annulaire. L'embout d'encliquetage est alors inséré dans l'ouverture annulaire pour venir coopérer par encliquetage avec le rebord annulaire.

### Brève description des dessins

D'autres caractéristiques et avantages de l'invention apparaîtront à la lumière de la description qui suit, faite en référence aux dessins annexes dans lesquels :
**Fig.1**

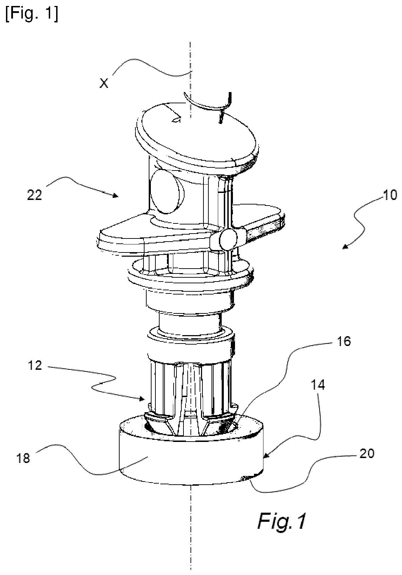

   [fig.1] représente une vue en perspective d'un dispositif de raccordement selon l'invention comprenant un embout d'encliquetage et un organe externe ;
**Fig.2**

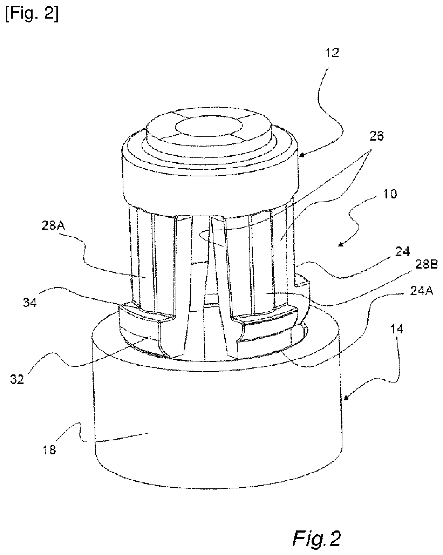

   [fig.2] représente une vue en perspective de l'embout et de l'organe externe de la figure 1 avant encliquetage ;
**Fig.3**

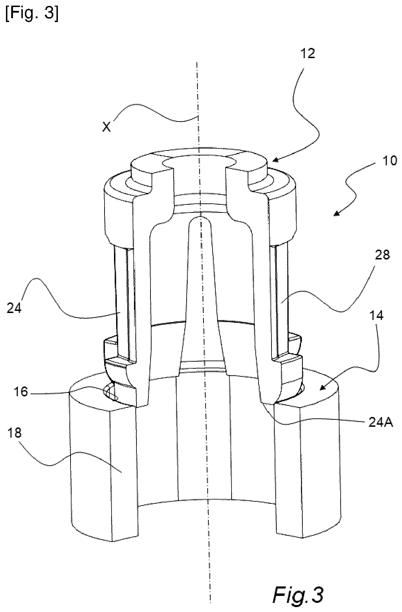

   [fig.3] représente une vue écorchée et en perspective du dispositif représenté sur la figure 2 ;
**Fig.4**

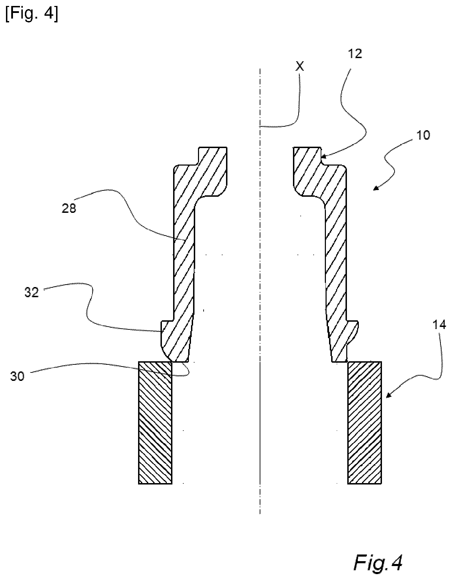

   [fig.4] représente une vue en coupe du dispositif de la figure 2 selon un plan passant par l'axe X ;
**Fig.5**

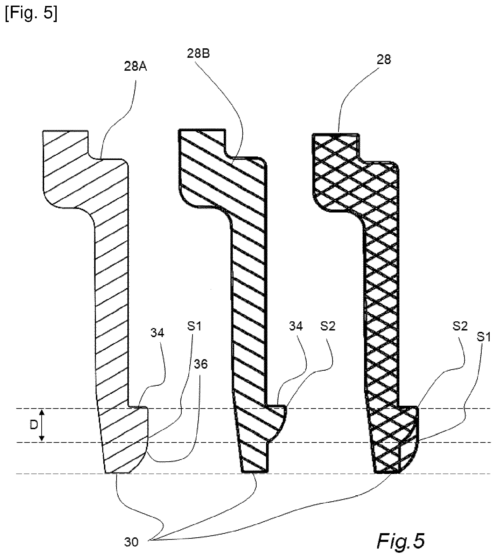

   [fig.5] représente une vue en coupe de deux pattes d'encliquetage de l'embout d'encliquetage de la figure 2 et d'une troisième patte illustrant schématiquement la superposition des deux pattes d'encliquetage ;
**Fig.6**

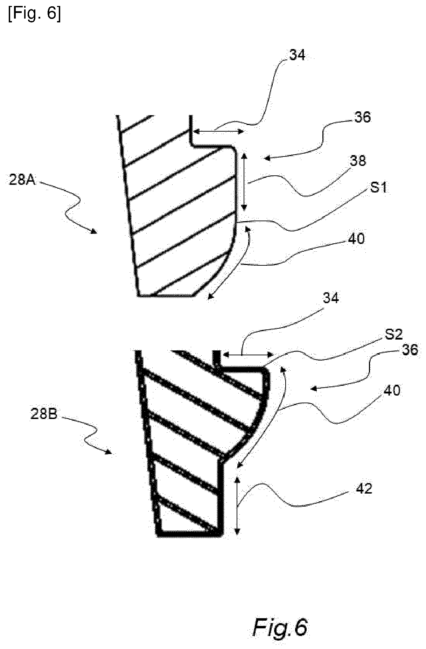

   [fig.6] représente une vue en perspective à échelle agrandie de deux pieds d'encliquetage des pattes d'encliquetage de l'embout de la figure 2 ;
**Fig.7**

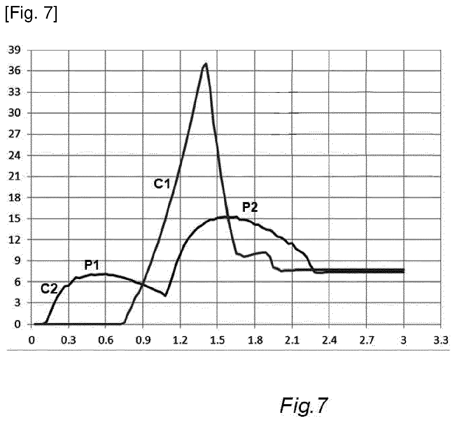

   [fig.7] est un graphique illustrant l'évolution de l'intensité d'un effort d'encliquetage de l'embout dans une première configuration C1 correspondant à l'art antérieur et dans une deuxième configuration C2 conforme à l'invention.

### Description des modes de réalisation

On a représenté sur **la** **figure 1** un dispositif de raccordement fluidique selon l'invention. Ce dispositif porte la référence générale 10. Le dispositif de raccordement 10 comprend un embout d'encliquetage 12 configuré pour être raccordé à un organe externe 14 par encliquetage. Dans l'exemple décrit, l'organe externe 14 comprend une ouverture annulaire 16 délimitée par une paroi périphérique annulaire 18 autour d'un axe X-X et par un rebord annulaire 20 s'étendant dans la direction radiale. L'embout 12 est dans cet exemple destiné à être emmanché à l'intérieur de l'ouverture 16 pour venir s'encliqueter sur le rebord annulaire 20.

Dans l'exemple décrit sur **la** **figure 1**, l'organe externe 14 forme une partie d'un boîtier de carter de boîte de vitesse d'un véhicule automobile (non représenté) comprenant un col délimité par la paroi annulaire 18 et débouchant sur l'ouverture annulaire 16, la paroi annulaire 18 ainsi que le rebord annulaire 20 s'étendant à l'intérieur du boîtier de carter. Le boîtier de carter est en général réalisé dans un matériau métallique. Pour simplifier les figures, l'organe externe 14 est représenté schématiquement par un anneau ou une bague.

Dans l'exemple décrit, l'embout 12 forme une portion d'extrémité d'un organe d'aération 22 de la boîte de vitesse (**figure 1**). Un tel organe d'aération 22 a pour fonction de mettre à l'air libre le boîtier du carter de la boîte de vitesse et comprend un évent d'aération désigné couramment par reniflard (non visible sur les figures). L'embout 12 est de préférence réalisé dans une matière plastique telle que par exemple une matière silicone ou une matière élastomère thermoplastique (TPE).

Comme cela est illustré sur **les** **figures 2 à 4****,** l'embout 12 comprend un corps 24 de forme générale tubulaire creux autour d'un axe longitudinal principal X. Le corps 24 a de préférence une forme générale annulaire autour de l'axe X.

L'embout 12 présente par ailleurs une extrémité libre ouverte 24A. Conformément à l'invention, l'embout 12 est pourvu d'une pluralité de fentes longitudinales 26 s'étendant depuis l'extrémité ouverte 24A de l'embout 12 et délimitant une pluralité de pattes d'encliquetage 28.

Comme cela est illustré **en** **figure 6****,** chaque patte d'encliquetage 28 comporte une extrémité libre 30 pourvue d'un pied d'encliquetage 32 délimité axialement par un épaulement radial 34 et se prolongeant axialement par une arête 36 de guidage en direction de l'extrémité libre 30.

L'épaulement radial 34 forme dans l'exemple un rebord d'accrochage avec l'organe externe 14 et dans cet exemple particulier, avec le rebord annulaire interne 20 de retenue. Ainsi, dans le mode de réalisation illustré sur les figures, la patte d'encliquetage 28 comprend un décrochement qui délimite l'épaulement 34 s'étendant radialement depuis une surface externe de la patte 28. L'épaulement 34 s'étend dans cet exemple dans un plan sensiblement orthogonal à l'axe X-X. L'embout d'encliquetage 12 est alors configuré pour être introduit dans l'ouverture 16 selon l'axe X-X jusqu'à ce que le pied d'encliquetage 32 vienne en prise avec le rebord annulaire de retenue 20 par l'intermédiaire de l'épaulement 34. Dans cette position, la face supérieure de l'épaulement radial 34 qui est tournée dans une direction opposée à l'extrémité 30 est en contact avec une face intérieure du rebord de retenue 20. Par ailleurs, selon l'invention, les épaulements radiaux 34 s'étendent dans un même plan radial orthogonal à l'axe principal X.

L'arête de guidage 36 a dans cet exemple pour fonction de faciliter l'insertion par déformation progressive de la patte d'encliquetage 28 radialement vers l'intérieur. Ainsi, la patte d'encliquetage 28 peut s'écarter légèrement de sa configuration de repos par fléchissement progressif radial guidé par le contact de l'arête de guidage 36 contre la face intérieure de la paroi 18 de l'ouverture 16. Cette déformation provoque le fléchissement progressif de la patte d'encliquetage 28 jusqu'à venir alors, par retour élastique, s'encliqueter sous le rebord annulaire 20 du col formé par la paroi annulaire 18 de l'ouverture 16.

L'arête de guidage 36 présente notamment un sommet S correspondant à un maximum d'effort d'encliquetage lié au franchissement dudit sommet S. Dans l'exemple décrit, le sommet S correspond à une portion épaissie du pied d'encliquetage 32. Le sommet S est défini au sommet de l'arête de guidage 36. Dans le mode de réalisation illustré sur les figures, le sommet S est défini comme étant le point du profil d'encliquetage le plus éloigné radialement de l'axe X.

De préférence, comme illustré, l'arête de guidage 36 de chacune des pattes 28 comprend une portion sensiblement rectiligne 38 partant de l'épaulement 34 et une portion à rampe 40 rejoignant la portion 38 pour définir le sommet S. Cette portion rectiligne 38 s'étend dans l'exemple parallèlement à l'axe X.

Dans l'exemple décrit, au moins des première 28A et deuxième 28B pattes définissent respectivement des premier S1 et deuxième S2 sommets, les sommets S1 et S2 sont décalés axialement l'un par rapport à l'autre. Grâce à ce décalage axial « D » des sommets S1 et S2, la valeur de l'effort cumulatif instantané d'encliquetage des deux pattes 28A, 28B dans l'organe externe 14 reste toujours inférieure à la somme de la valeur maximale de l'effort d'encliquetage associé à chacune des pattes 28A, 28B prises individuellement.

Par exemple, afin de réaliser ce décalage axial « D » des sommets S1 et S2, la portion rectiligne 38, séparant l'épaulement radial 34 de la portion à rampe 40, est de longueur axiale différente entre les première 28A et deuxième 28B pattes.

On voit même que dans **la** **figure 2****,** au moins l'une des première 28A et deuxième 28B pattes, ici la deuxième patte 28B, présente une portion rectiligne 38 de longueur axiale nulle. Par conséquent, la portion à rampe 40 part directement de l'épaulement radial 34.

De préférence, la portion à rampe 40 de chacune des pattes présente un profil curviligne, par exemple, de forme arrondie, par exemple en forme d'arc de cercle. Dans une variante non illustrée, la portion à rampe 40 présente une forme rectiligne à bord droit mais biseautée. Eventuellement, dans une autre variante non illustrée, la portion à rampe 40 peut également comprendre une combinaison d'un arc de cercle et d'une forme rectiligne en biseau.

De préférence, l'arête de guidage 36 d'au moins une patte 28, ici la patte 28B, est espacée du bord d'extrémité libre 30 de ladite patte d'encliquetage 28 par une portion d'engagement amincie 42 s'étendant axialement entre l'arête de guidage 36 et le bord de l'extrémité libre 30. De préférence, cette portion amincie 42 est configurée pour produire une valeur d'intensité d'effort d'engagement sensiblement nulle de la portion 42 avec l'organe externe 14.

Dans le mode de réalisation illustré sur les figures, l'embout 12 comprend une pluralité de pattes d'encliquetage 28 réparties par paires de pattes identiques. Par exemple, l'embout 12 comprend une paire de premières pattes 28A définissant des premiers sommets S1 et une paire de deuxièmes pattes 28B définissant des deuxièmes sommets S2, les pattes de chacune des paires étant disposées en vis-à-vis l'une de l'autre. De préférence, l'embout 12 comprend un corps 24 sensiblement annulaire dans lequel la répartition des pattes 28 est régulière autour de sa circonférence.

Dans une variante de l'invention non illustrée sur les figures, les pattes d'encliquetage 28 peuvent présenter un profil d'encliquetage qui fait saillie radialement vers l'intérieur pour former un pied d'encliquetage 32 tourné vers l'intérieur de l'embout 12 engageant alors une coopération externe de l'embout avec l'organe externe 14 et non pas comme sur les figures tourné vers l'extérieur engageant alors une coopération interne de l'embout 12 avec l'organe externe 14. Le sommet S est alors défini, dans cette variante, comme étant le point du profil d'encliquetage le plus proche radialement de l'axe X.

On a représenté sur **la** **figure 7** un graphique représentant l'évolution de la valeur de l'intensité en Newton de l'effort d'insertion de l'embout 12 à l'intérieur de l'ouverture annulaire 16 de l'organe externe 14 en fonction de la profondeur d'insertion axiale en millimètres. Le graphique comprend deux courbes C1 et C2.

La courbe C1 correspond à l'évolution de la valeur d'intensité de l'effort d'insertion totale en fonction de la profondeur d'insertion axiale lorsque l'embout 12 comprend une pluralité de pattes d'encliquetage identiques 28. Par exemple, l'embout 12 comporte quatre pattes d'encliquetage 28 présentant toutes un même profil d'encliquetage de la patte d'encliquetage 28B illustrée **en** **figure 5****.**

Sur cette courbe C1 initialement, l'intensité de l'effort d'insertion est nulle et correspond au contact de la portion sensiblement rectiligne de faible épaisseur 42 située entre l'extrémité libre 30 et le pied d'encliquetage 32. Puis, la portion à rampe 40 de l'arête de guidage 36 vient en contact avec la surface interne de la paroi annulaire 18 de l'organe externe 14 provoquant le fléchissement progressif vers l'intérieur des pattes d'encliquetage 28. Ceci créée un effort d'insertion et un fléchissement des pattes d'encliquetage 28. Cet effort d'insertion cumulatif pour les quatre pattes d'encliquetage 28 a une valeur d'intensité qui augmente jusqu'à atteindre un maximum lors du franchissement simultané des quatre sommets S2. On observe alors un pic d'intensité d'effort d'insertion à 14 millimètres de profondeur d'insertion. Une fois les sommets franchis, la valeur d'intensité de l'effort se stabilise à une valeur de 9 millimètres.

La courbe C2 correspond à l'évolution de la valeur d'intensité de l'effort d'insertion totale en fonction de la profondeur d'insertion lorsque l'embout 12 comprend une pluralité de pattes identiques 28 deux à deux par paires, conforme à l'invention. Par exemple, l'embout 12 comprend une paire de pattes d'encliquetage 28A et une paire de pattes d'encliquetage 28B, les pattes 28 de chacune des paires s'étendant en vis-à-vis l'une de l'autre.

Sur la courbe C2, on distingue deux portions de courbe P1 et P2. La portion P1 a une forme de bosse et correspond au franchissement des sommets S1 de la paire de pattes d'encliquetage 28A. En effet, l'ergot d'encliquetage de ces pattes 28A comprend une arête de guidage 36 qui débute à partir de l'extrémité libre 30 de la patte sans décalage axial. La portion P2 a également une forme de bosse et correspond au franchissement des sommets S2 qui sont décalés axialement par rapport aux sommets S1 d'un décalage axial « D ».

Grâce au décalage axial D des sommets S1 et S2, la valeur d'intensité de l'effort d'insertion reste inférieure à 15 Newtons alors que sans décalage axial des sommets, selon l'art antérieur et dans cet exemple décrit, la valeur de l'intensité peut atteindre une valeur pic de plus de 36 Newtons. La courbe C2 du graphique montre bien la répartition presque homogène de la valeur totale de l'effort d'insertion selon la direction axiale à la différence de la courbe C1 qui démontre un pic d'effort isolé.

Bien entendu, l'invention ne se limite pas aux modes de réalisation précédemment décrits. D'autres modes de réalisation à la portée de l'homme du métier peuvent aussi être envisagés sans sortir du cadre de l'invention définie par les revendications ci-après.

## Revendications

1. Embout (12) à raccorder par encliquetage à un organe externe (14), comprenant un corps tubulaire creux (24) d'axe principal longitudinal X et pourvu d'une pluralité de fentes longitudinales (26) s'étendant depuis une extrémité ouverte (24A) de l'embout (12) et délimitant une pluralité de pattes d'encliquetage (28 ; 28A, 28B), chaque patte (28 ; 28A, 28B) comportant une extrémité libre (30) pourvue d'un pied d'encliquetage (32) délimité axialement par un épaulement radial (34) d'encliquetage et se prolongeant axialement par une arête de guidage (36) vers ladite extrémité libre (30), l'arrête de guidage (36) présentant un sommet (S; S1, S2) correspondant à un maximum d'effort d'encliquetage lié au franchissement dudit sommet (S ; S1, S2), **caractérisé en ce que** les épaulements radiaux (34) s'étendent dans un même plan radial défini par rapport à l'axe principal X **et en ce que,** au moins des première (28A) et deuxième (28B) pattes définissant respectivement des premier (S1) et deuxième (S2) sommets, les sommets (S1, S2) sont décalés axialement l'un par rapport à l'autre selon l'axe principal X de telle sorte que la valeur de l'intensité de l'effort cumulatif instantané d'encliquetage des deux pattes (28A, 28B) dans l'organe externe (14) reste toujours inférieure à la somme des valeurs maximales d'effort d'encliquetage de chacune des pattes (28A, 28B).

2. Embout (12) selon la revendication précédente, dans lequel l'arête de guidage (36) comprend une portion axiale sensiblement rectiligne (38) et une portion à rampe (40) se rejoignant pour définir le sommet (S ; S1, S2), la portion rectiligne (38) de chacune des première (28A) et deuxième (28B) pattes étant de longueur axiale différente.

3. Embout (12) selon la revendication précédente, dans lequel la portion à rampe (40) de chacune des pattes (28A, 28B) présente un profil curviligne ou arrondi.

4. Embout (12) selon la revendication précédente, dans lequel la portion à rampe (40) forme un arc de cercle et/ou présente une forme rectiligne en biseau.

5. Embout (12) selon l'une quelconque des revendications 2 à 4, dans lequel au moins l'une des première (28A) et deuxième (28B) pattes présente une portion rectiligne (38) de longueur axiale nulle et la portion à rampe (40) rejoint l'épaulement radial (34) pour définir le sommet (S).

6. Embout (12) selon l'une quelconque des revendications précédentes, dans lequel le pied d'encliquetage (32) est formé à distance du bord d'extrémité libre (30) et l'arête de guidage (36) est espacée dudit bord (30) par une portion d'engagement amincie (42) relativement au pied d'encliquetage (32).

7. Embout (12) selon l'une quelconque des revendications précédentes, comprenant une paire de premières pattes (28A) définissant des premiers sommets (S1) et une paire de deuxièmes pattes (28B) définissant des deuxièmes sommets (S2), les pattes de chacune des paires s'étendent en vis-à-vis l'une de l'autre.

8. Embout (12) selon l'une quelconque des revendications précédentes, dans lequel les pattes d'encliquetage (28 ; 28A, 28B) présentent chacune un même profil d'encliquetage qui fait saillie radialement vers l'extérieur ou vers l'intérieur de chaque patte (28 ; 28A, 28B).

9. Embout (12) selon l'une quelconque des revendications précédentes, comprenant un corps (24) sensiblement annulaire, la répartition des pattes (28) est régulière autour de la circonférence du corps (24).

10. Dispositif (10) de raccordement comprenant un embout (12) selon l'une quelconque des revendications précédentes et un organe externe (14) configuré pour recevoir l'embout (12) par encliquetage, **caractérisé en ce que** l'organe externe (14) comprend un rebord annulaire (20) avec lequel l'embout (12) coopère par encliquetage interne ou externe.
